# EUROPEAN PATENT APPLICATION

(11) **EP 4 414 265 A1**
(43) Date of publication of application: **14.08.2024**
(21) Application number: 24156681.9
(22) Date of filing: 08.02.2024
(51) Int. Cl.: B64D 11/06, B64D 13/06, B64D 11/00

(54) **EXECUTIVE AND VIP SEATING INTEGRATED AIR IONIZER**

(30) Priority: 08.02.2023 IN 202311008095; 19.01.2024 US 202418417964
(71) Applicant: B/E Aerospace, Inc., Winston-Salem, NC 27105 (US)
(72) Inventor: GAJENDRA, Hemanth Raghav, 560008 Bangalore, KA (IN); VASISHTA, Sujan Jayasimha, 560083 Bangalore, KA (IN); KUPPAN, Skandan Berikai, 560083 Bangalore (IN); St. ROCK, Brian E., Andover, CT, 06232 (US)
(74) Representative: Dehns

(57) **Abstract**

An air ionizer (100) is integrated into aircraft executive and VIP suites. The integrated air ionizers provide personalized fresh air and ionization to the passenger's comfort. Air ionizers integrated in aircraft suites is effective, provides increased ion concentration, and reduces malodor, improve cabin air quality, and increase confidence to fly. The air ionizer provides IFE controlled ionization level.

## Description

The present application claims the benefit of Indian Patent App. No. 202311008095 (filed February 8, 2023), and US application No. 18/417,964 filed on 19 January 2024.

### BACKGROUND

Air ionizers are being designed and developed primarily for mitigating volatile organic compounds, electrical fumes, smoke, molds, dust, malodor, and pathogens through ionization. Currently, aerospace grade air ionizers are integrated directly into ECS ducting only. Such installation is ineffective due to decay, neutralization through charge recombination, grounded / non-grounded surface neutralization, low humidity inflight conditions, and air passing through multiple filters, humidifier, manifolds, and new (off gassing) materials that neutralize ions within the ECS. Without air ionizers, cabin air quality is poor with volatile organic compounds present; the cabin air comprises 50% recirculated air and 50% turbo-compressor bled air; and the cabin air may contain electrical fumes, alcohol, or human odor. With an air ionizer, volatile organic compounds are mitigated; the cabin air is fresh; electrical fumes are removed; and alcohol and human odors are mitigated.

The Ion count is inversely proportional to the distance travelled from source of emission, so it would be advantageous to reduce the distance traveled. However, there is no controller within air ionizers for user specific requirements.

### SUMMARY

In one aspect, embodiments of the inventive concepts disclosed herein are directed to an air ionizer integrated into aircraft executive and VIP suites. The integrated air ionizers provide personalized fresh air and ionization to the passenger's comfort. Air ionizers integrated in aircraft suites is effective, provides increased ion concentration, and reduces malodor, improve cabin air quality, and increase confidence to fly.

In an embodiment, the air ionizer provides IFE controlled ionization level.

It is to be understood that both the foregoing general description and the following detailed description are exemplary and explanatory only and should not restrict the scope of the claims. The accompanying drawings, which are incorporated in and constitute a part of the specification, illustrate exemplary embodiments of the inventive concepts disclosed herein and together with the general description, serve to explain the principles.

### BRIEF DESCRIPTION OF THE DRAWINGS

The numerous advantages of the embodiments of the inventive concepts disclosed herein may be better understood by those skilled in the art by reference to the accompanying figures in which:
FIG. 1 shows a block diagram of an air ionizer according to an exemplary embodiment;
FIG. 2A shows a representation of ion concentrations under different environmental conditions;
FIG. 2B shows a graph of ion concentrations at different humidity's and distances from a discharge electrode;
FIG. 3 shows an environmental view of an aircraft suite suitable for an exemplary embodiment;
FIG. 4 shows perspective views of an aircraft suite according to an exemplary embodiment;
FIG. 5 shows perspective views of an electrode housing according to an exemplary embodiment;
FIG. 6 shows a block diagram of a system according to an exemplary embodiment;
FIG. 7 shows an environmental view of an aircraft with aircraft suites according to an exemplary embodiment;
FIG. 8 shows perspective views of an aircraft suite according to an exemplary embodiment;
FIG. 9 shows a representation of a user interface or control mechanism according to an exemplary embodiment;

### DETAILED DESCRIPTION

Before explaining various embodiments of the inventive concepts disclosed herein in detail, it is to be understood that the inventive concepts are not limited in their application to the arrangement of the components or steps or methodologies set forth in the following description or illustrated in the drawings. In the following detailed description of embodiments of the instant inventive concepts, numerous specific details are set forth in order to provide a more thorough understanding of the inventive concepts. However, it will be apparent to one of ordinary skill in the art having the benefit of the instant disclosure that the inventive concepts disclosed herein may be practiced without these specific details. In other instances, well-known features may not be described in detail to avoid unnecessarily complicating the instant disclosure. The inventive concepts disclosed herein are capable of other embodiments or of being practiced or carried out in various ways. Also, it is to be understood that the phraseology and terminology employed herein is for the purpose of description and should not be regarded as limiting.

As used herein a letter following a reference numeral is intended to reference an embodiment of a feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of "a" or "an" are employed to describe elements and components of embodiments of the instant inventive concepts. This is done merely for convenience and to give a general sense of the inventive concepts, and "a" and "an" are intended to include one or at least one and the singular also includes the plural unless it is obvious that it is meant otherwise.

Also, while various components may be depicted as being connected directly, direct connection is not a requirement. Components may be in data communication with intervening components that are not illustrated or described.

Finally, as used herein any reference to "one embodiment," or "some embodiments" means that a particular element, feature, structure, or characteristic described in connection with the embodiment is included in at least one embodiment of the inventive concepts disclosed herein. The appearances of the phrase "in at least one embodiment" in the specification does not necessarily refer to the same embodiment. Embodiments of the inventive concepts disclosed may include one or more of the features expressly described or inherently present herein, or any combination or sub-combination of two or more such features.

Broadly, embodiments of the inventive concepts disclosed herein are directed to an air ionizer integrated into aircraft executive and VIP suites. The integrated air ionizers provide personalized fresh air and ionization to the passenger's comfort. Air ionizers integrated in aircraft suites is effective, provides increased ion concentration, and reduces malodor, improve cabin air quality, and increase confidence to fly. The air ionizer provides IFE controlled ionization level.

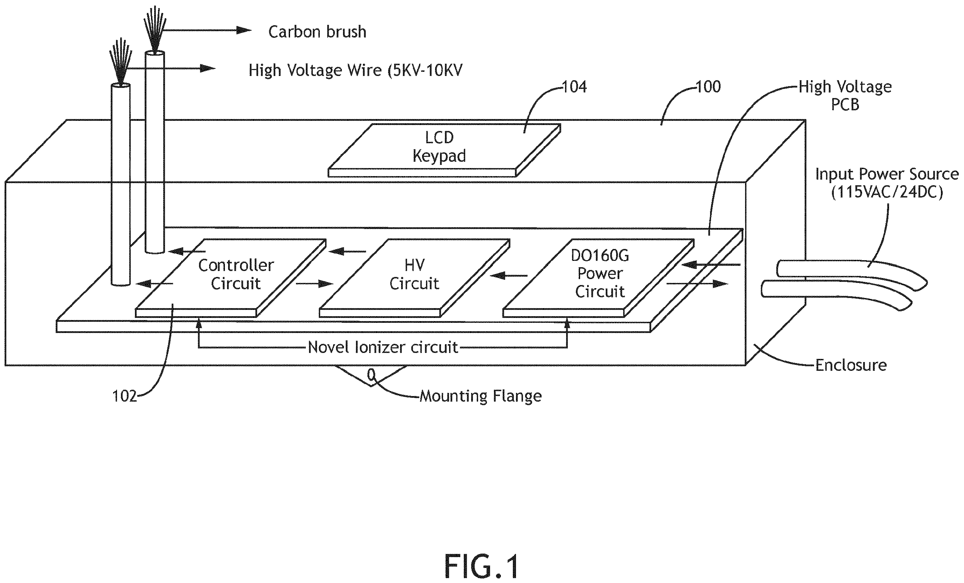

Referring to FIG. 1, a block diagram of an air ionizer 100 according to an exemplary embodiment is shown. The air ionizer 100 includes a controller 102 that is adjustable via control signals and / or an LCD keypad 104. The air Ionizer is able to scale / descale the ion count according to human requirements; a feedback system may allow the controller 102 to maintain a predefined ion concentration. The air ionizer 100 is modular and may be integrated according to packaging requirement.

In at least one embodiment, the air ionizer 100 may consume approximately 4 W and draw approximately 142 mA. In at least one embodiment, the air ionizer 100 includes an enclosure that may be aluminum with a coating such as Teflon. In at least one embodiment, the air ionizer 100 includes one or more electrodes. The electrodes may be comprised of carbon fiber.

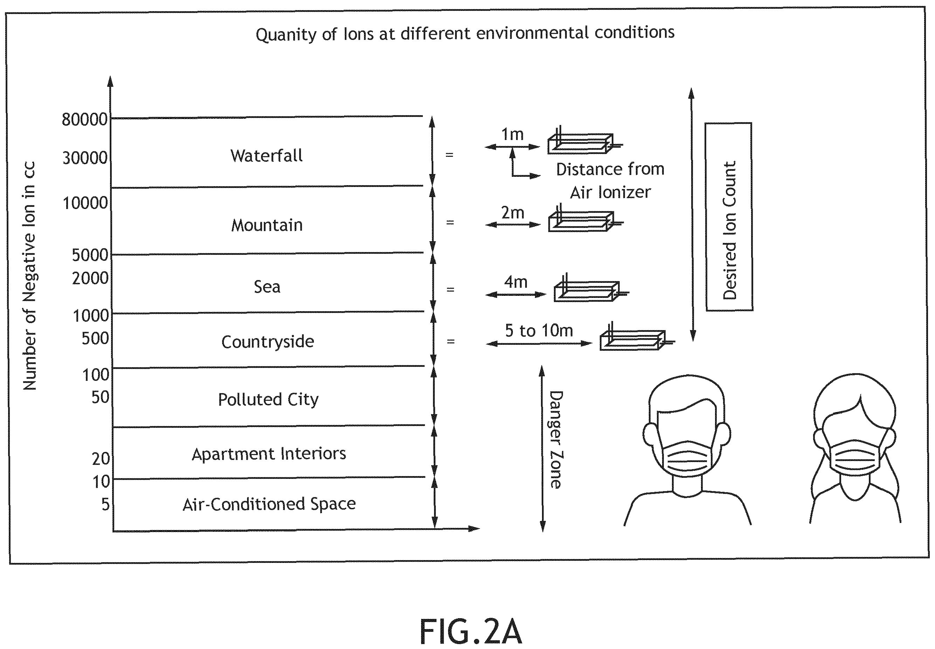

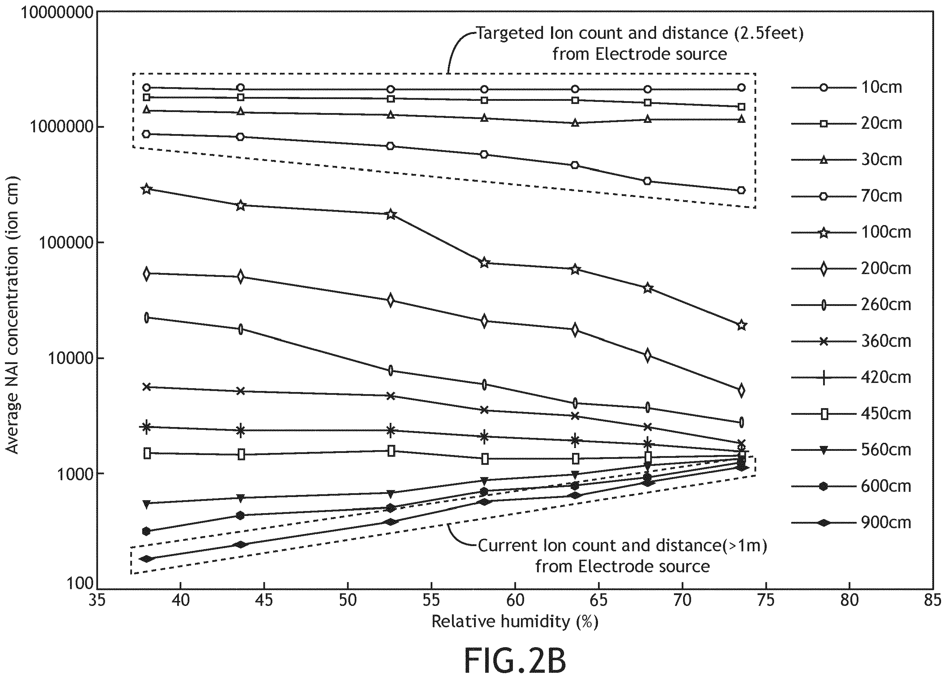

Referring to FIGS. 2A-2B, a representation of ion concentrations under different environmental conditions and a graph of ion concentrations at different humidity's and distances from a discharge electrode are shown. Ion concentration is directly correlated to air quality. Fair-weather ion concentrations are greater than eight hundred to one thousand ions per cubic centimeter, with the fresh air threshold greater than one thousand ions per cubic centimeter. The ion count in human seating space may be less than one hundred ions per cubic meter. To be effective, the distance to an air ionizer should be less than one meter. By contrast ion concentration generated by an air ionizer is inversely correlated to distance and humidity from the electrode.

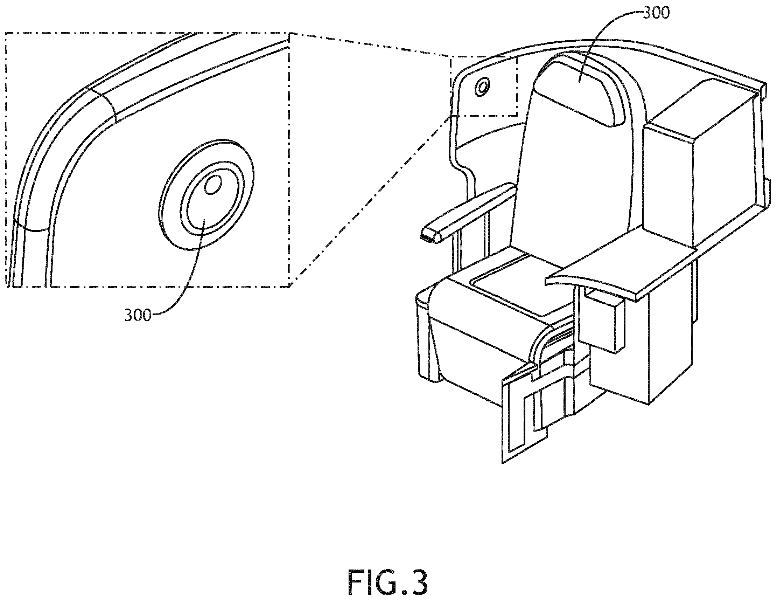

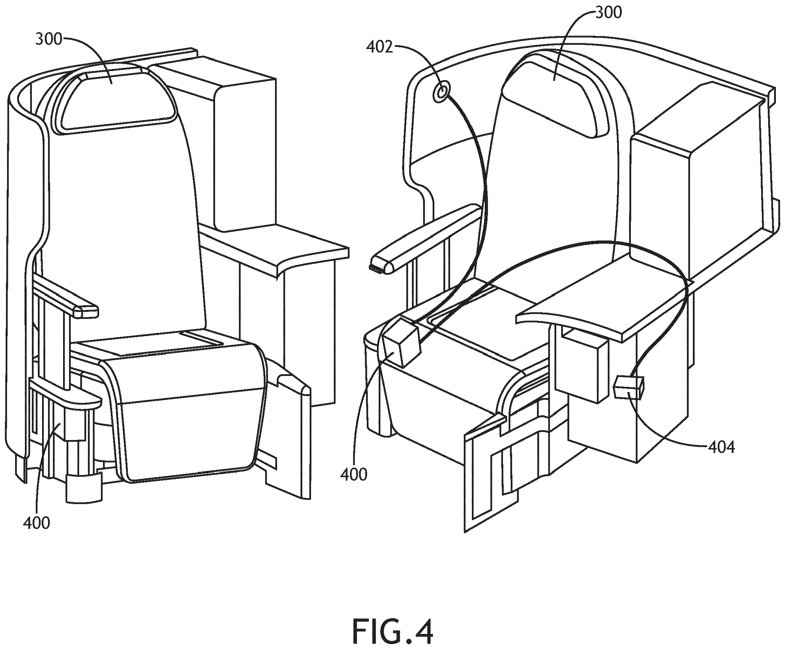

Referring to FIGS. 3 and 4, environmental views of an aircraft suite according to an exemplary embodiment are shown. A suitable suite includes a passenger seat 300, and may include a reading lamp assembly 302. In at least one embodiment, the aircraft suite includes an air ionizer control unit 400, an electrode 402, and a power supply 404.

In at least one embodiment, the control unit 400 of the air ionizer is disposed within an available space in the passenger seat 300 (i.e., within a side armrest bracket). The control unit 400 is modular and therefore not limited to a single location. The control unit 400 may include an enclosure with modular mounting holes to allow the control unit 400 to be assembled at any location. A power supply 404 may be derived from existing power modules, and may be disposed separately from the control unit 400.

An electrode 402 is disposed in the aircraft suite, proximal to the passenger seat 300. In at least one embodiment, the electrode 402 may be place in conjunction with the reading lamp assembly 302. Such disposition produces proximity between the source of ionization (the electrode 402) and the passenger of less than 3 feet (1 meter).

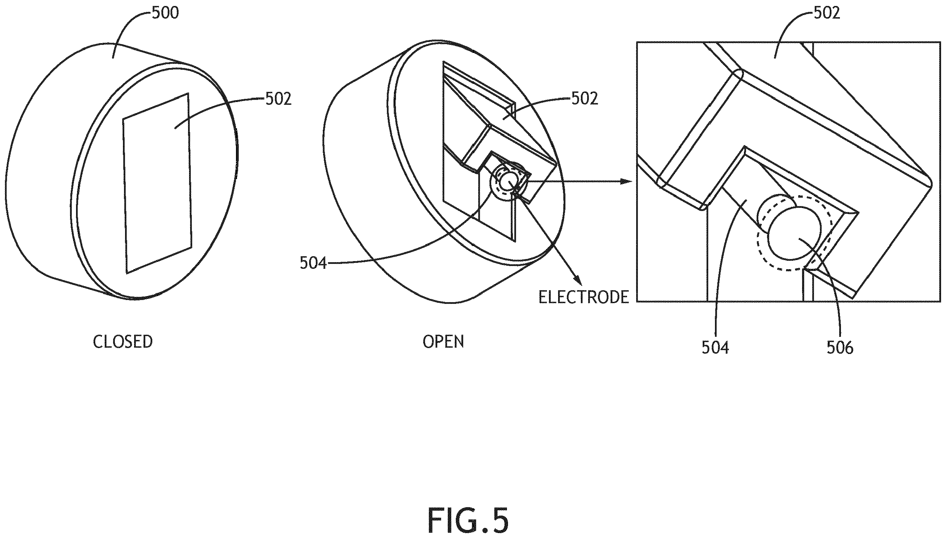

Referring to FIG. 5, perspective views of an electrode housing 500 according to an exemplary embodiment are shown. The electrode housing 500 encases a swivel mechanism 502 to facilitate the opening and closing of the electrode 504; the swivel mechanism 502 safeguards the electrode 504 when it is not in use. In at least one embodiment, a non-conducting mesh structure 506 guards the electrode 504 when it is in use.

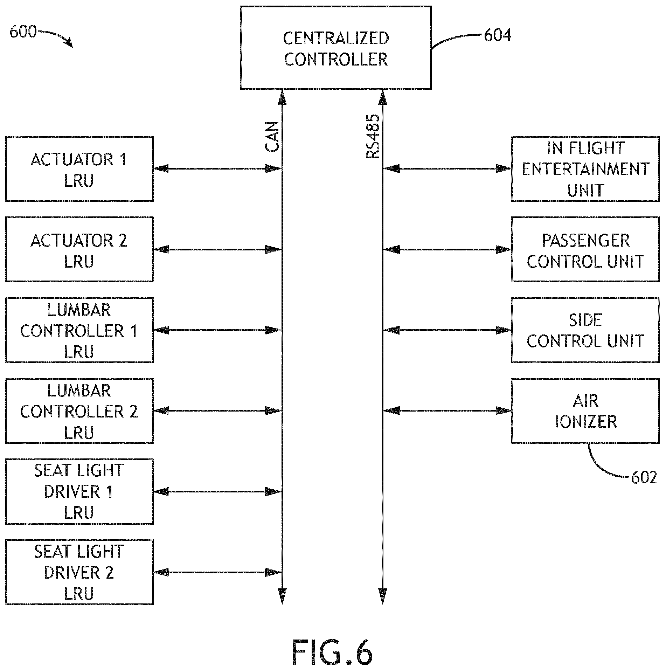

Referring to FIG. 6, a block diagram of a system 600 according to an exemplary embodiment is shown. The system 600 includes existing suite specific controllers and line replaceable units. An air ionizer 602 according to an exemplary embodiment may be incorporated into the system 600 by connecting an air ionizer controller to a system communication channel (bus, RS485, CAN, etc.). A centralized controller 604 may manipulate the output of the air ionizer 602 via control signals through the system communication channel.

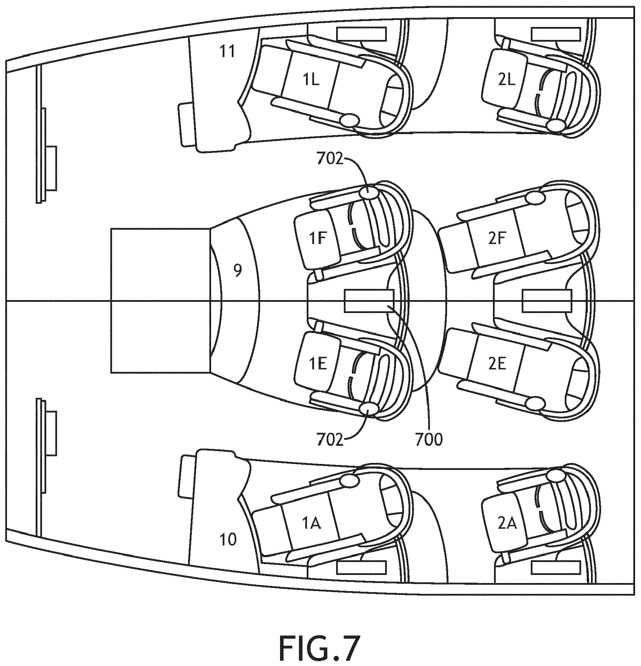

Referring to FIG. 7, an environmental view of an aircraft with aircraft suites according to an exemplary embodiment is shown. In at least one embodiment, a single air ionizer 700 may be integrated into multiple, proximal aircraft suites with appropriate electrode placement. It is desirable that the distance between the electrodes 702, 704 and the corresponding passenger be less than 3 feet (1 meter) where the ion concentration is experimentally determined at 100,000 ions per cubic centimeters. In at least one embodiment, the electrodes 702, 704 are individually addressable via a controller.

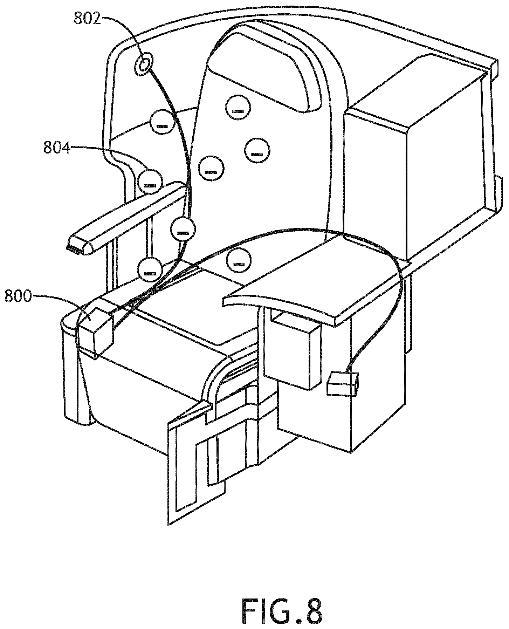

Referring to FIG. 8, a perspective view of an aircraft suite according to an exemplary embodiment is shown. When a swivel mechanism 802 is opened, an enclosed electrode begins to emit ions 804 to the surrounding air. The number / concentration of ions 804 emitted may be based on the passenger's requirements. A control unit 800 maintains the ions 804 being emitted. The ions 804 are generally closer to the passenger than existing systems to provide purified air with better cabin air quality.

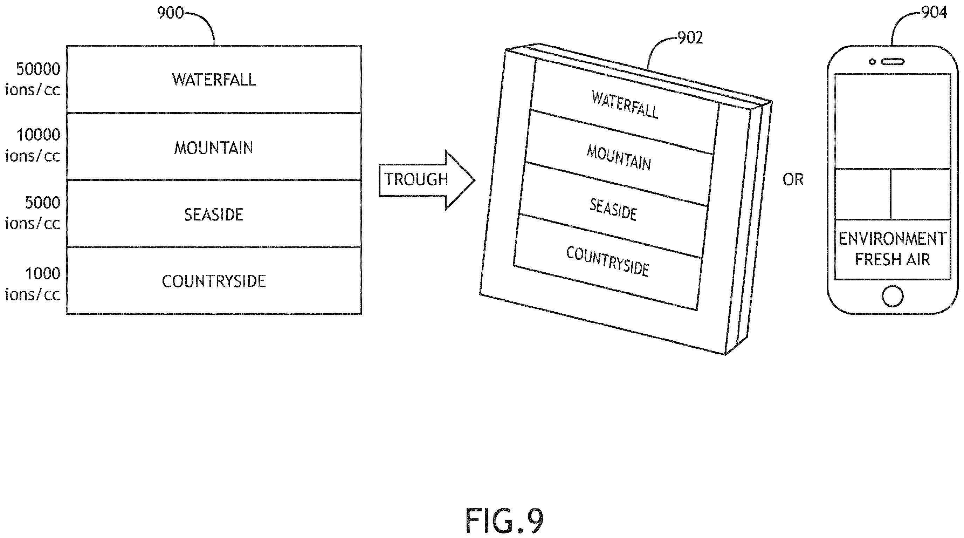

Referring to FIG. 9, a representation of a user interface or control mechanism according to an exemplary embodiment is shown. In at least one embodiment, a suite controller or air ionizer control unit may provide a user interface 900 with preset ionization levels for each corresponding aircraft suite. The user interface 900 may be accessible via an in-suite control panel 902. Alternatively, or in addition, the user interface 900 may be accessible via a separate device app 904. The user interface 900 may be incorporated into, and interact with, other environmental settings accessible via such control panel 902 and / or device app 904. In at least one embodiment, passengers may select an ionization concentration separate from the preset ionization levels.

Embodiments of the present disclosure enable a seat integrated air ionizer. The placement of the air ionizer closer to the passenger provides a personalized purification to the passenger. A single air ionizer may be used to influence two or more seats to reduce the incurred cost per seat. Closer proximity of the air ionizer to the passenger extends the life of the electrodes and reduces the number of ionizers required.

It is believed that the inventive concepts disclosed herein and many of their attendant advantages will be understood by the foregoing description of embodiments of the inventive concepts, and it will be apparent that various changes may be made in the form, construction, and arrangement of the components thereof without departing from the scope of the invention as defined by the claims.

## Claims

1. An air ionizer comprising:
an electrode (402);
a power supply (404);
a control unit (400) configured to:
receive a user specific ionization profile; and
actuate the electrode to provide the user specific ionization profile.

2. The air ionizer of Claim 1, further comprising an electrode enclosure (500).

3. The air ionizer of Claim 2, wherein the electrode enclosure comprises a swivel mechanism (502) to switch the enclosure from an open orientation and a closed orientation.

4. The air ionizer of Claim 2, further comprising a non-conductive mesh (506) disposed around the electrode.

5. The air ionizer of any preceding Claim, further comprising a user interface (900) configured to adjust the user specific ionization profile.

6. The air ionizer of any preceding Claim, further comprising a housing defining a plurality of modular mounting elements.

7. An aircraft suite comprising:
an air ionizer (100) as claimed in any preceding claim.

8. The aircraft suite of Claim 7, further comprising a reading lamp assembly (302), wherein the electrode is disposed within the reading lamp assembly.

9. An aircraft suite air quality control system comprising:
an air ionizer as claimed in any of claims 1 to 6.

10. The system of claim 9, further comprising a reading lamp assembly, wherein the
electrode is disposed within the reading lamp assembly.

11. The system of Claim 9 or 10, wherein:
the air ionizer further comprises a second electrode; and
the electrode and second electrode are disposed in separate aircraft suites.
